# FASCICULE DE BREVET EUROPEEN

(11) **EP 0 718 181 B1**
(45) Date de publication et mention de la délivrance du brevet: **05.09.2001**
(21) Numéro de dépôt: 95402762.9
(22) Date de dépôt: 07.12.1995
(51) Int. Cl.: B62J 9/00

(54) **Dispositif de fixation pour sacoche sous une selle de bicylette**
Befestigungsvorrichtung für Tasche unter einem Fahrradsattel
Fixation device for bag under a bicycle seat

(30) Priorité: 21.12.1994 FR 9415393
(43) Date de publication de la demande: 26.06.1996
(73) Titulaire: DECATHLON S.A., F-59650 Villeneuve d'Ascq (FR)
(72) Inventeur: Izrael, Armelle, F-77100 Meaux (FR)
(74) Mandataire: Hennion, Jean-Claude

(56) Documents cités:
- DE-U- 9 405 574
- GB-A- 491 480
- GB-A- 658 128
- GB-A- 1 348 184

## Description

La présente invention concerne un système de fixation pour sacoche sous une selle de bicyclette.

Le dessous de selle de bicyclette est traditionnellement pourvu de premiers moyens fixes coopérant avec des seconds moyens complémentaires fixés sur la sacoche, par exemple des moyens à vis-écrous. Ces premiers moyens sont installés à demeure sur la structure de support de la selle, généralement constitués par deux tiges. Ces tiges de selle présentent, selon les modèles de selle, des diamètres, des écartements et un angle de séparation variable. Ces moyens d'assemblage ne sont donc pas compatibles avec tous les modèles de selle ; en outre, ils nécessitent des outils pour installer les premiers moyens d'assemblage sur les tiges de support de la selle, puis pour assembler ces premiers moyens aux seconds moyens fixés sur la sacoche. Enfin, les premiers moyens d'assemblage fixés à demeure sous la selle alourdissent la bicyclette. De tels moyens sont notamment connus par le document GB-A. 658.128.

Il existe un autre type de dispositif qui tente de remédier à ces inconvénients. Il se présente sous la forme d'un T dont la branche verticale est fixée perpendiculairement à la surface de la sacoche et est destinée à être appliquée contre les deux tiges de la structure du support. La sacoche est mise en place en introduisant le T entre les tiges et parallèlement à celles-ci, puis en faisant tourner d'un quart de tour la sacoche et le T pour qu'il prenne appui sur les tiges de selle. De manière à renforcer la fixation, la sacoche est également munie d'un organe de clipsage à son extrémité apte à s'encliqueter sur le tube de selle dans lequel glisse la selle. Cependant, ce système connu n'est pas compatible avec toutes les selles. En effet, la branche horizontale du T est de faible dimension de manière à ne pas buter contre le tube et/ou les tiges de selle lors de l'installation de la sacoche. Cette faible dimension n'est pas adaptée à tous les écartements possibles de tiges de selle.

L'invention vise à remédier à ces inconvénients et propose un dispositif qui ne nécessite aucun moyen complémentaire fixé sous la selle, ce qui allège avantageusement la bicyclette ; qui soit de mise en place simple et rapide en un seul point d'ancrage sous la selle, voire deux suivant la taille de la sacoche ; qui ne nécessite pas d'outils pour retirer la sacoche du dessous de selle ; qui soit aussi facile à installer qu'à retirer, permettant à l'utilisateur de prendre facilement la sacoche avec lui lorsque la bicyclette n'est pas utilisée et de pouvoir ainsi s'en servir pour transporter ses effets personnels (argent, papiers) ; qui permet à l'utilisateur de pouvoir l'utiliser sur toute sorte de bicyclettes sans nécessiter de sacoches supplémentaires.

A cette fin, selon l'invention, le dispositif de fixation est caractérisé par les caractéristiques de la revendication 1.

Selon une forme de réalisation avantageuse, le deuxième élément est mobile par rapport au premier élément en translation, transversalement auxdites tiges.

De manière avantageuse, le premier et le deuxième éléments sont pourvus chacun d'une surface de butée constituée pas une rainure longitudinale de section transversale en U, de forme sensiblement complémentaire aux tiges.

Avantageusement, le plan des rainures forme un angle par rapport au plan du panneau supérieur de la sacoche, de manière que ce dernier soit sensiblement horizontal une fois fixé sur la selle. Ainsi, la ligne, l'aérodynamisme de la bicyclette est respecté.

Avantageusement, le plan des rainures forme un angle par rapport au plan vertical perpendiculaire au plan de la sacoche et les faces internes des rainures ne sont pas parallèles. Ces caractéristiques permettent, avec les caractéristiques principales de l'invention, de rendre le dispositif complètement compatible avec tout modèle de selle.

Selon une forme de réalisation avantageuse, le deuxième élément coulisse à l'intérieur du premier élément fixe, de manière télescopique.

De manière avantageuse, le moyen de rappel est un ressort de compression.

Avantageusement, l'élément fixe comprend une plaque de surface plane susceptible de s'appliquer contre la face supérieure plane de la sacoche et d'y être fixée par rivetage ou moyen équivalent.

Le dispositif est ainsi standard et s'adapte à de nombreux types de sacoche.

Avantageusement, l'élément mobile est muni à son extrémité de moyens de retenue du type ergot, aptes à limiter en butée le déplacement de l'élément mobile. L'élément mobile et l'élément fixe comportent une surface de préhension sensiblement transversale aux tiges et présentant une forme adaptée aux doigts de la main.

Le dispositif est réalisé en matière thermoformable par injection plastique.

D'autres particularités et avantages de l'invention ressortiront mieux de la description détaillée ci-après de modes de réalisation, donnés uniquement à titre d'exemples et se référant aux dessins annexés dans lesquels :
- La figure 1 est une vue en perspective du dispositif fixé sur une sacoche et installé sur des tiges de selle ;
- La figure 2 est une vue en perspective du dispositif désolidarisé de la sacoche ;
- La figure 3 est une vue en plan de droite de l'élément fixe ;
- La figure 4 est une vue en plan de dessus de l'élément mobile ; et
- Les figures 5a et 5b sont des vues en coupe du dispositif respectivement en position relâchée et comprimée.

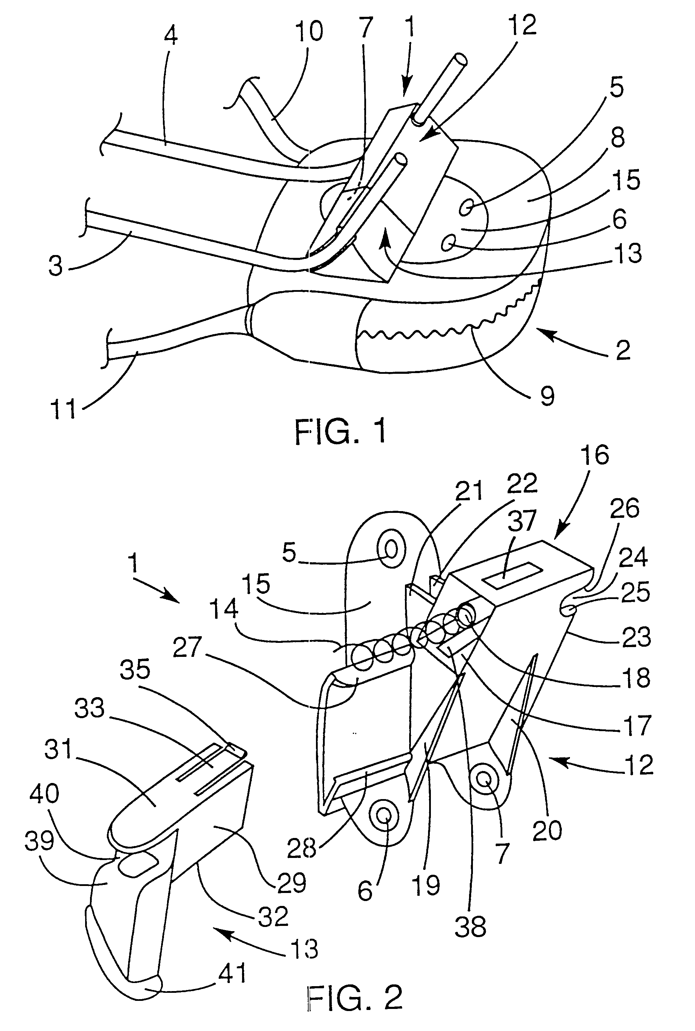

Comme montré sur la figure 1, l'invention concerne un dispositif 1 de fixation d'une sacoche 2 sur des tiges 3, 4 d'une selle connue en soi (non représentée).

Pour répondre au souci constant des cyclistes d'obtenir une ligne parfaite, aérodynamique et discrète de la bicyclette, la sacoche 2 est disposée parallèlement au sol. Dans la description qui suit, l'horizontale est définie comme parallèle au plan longitudinal de la sacoche, lui-même parallèle au sol, ce qui correspond à la plupart des situations, et la verticale comme perpendiculaire à celui-ci.

Le dispositif 1 est assujetti à la sacoche 2 au moyen de vis-écrous ou encore de rivets placés au niveau de trois ouvertures 5, 6, 7 dispensées dans le dispositif 1, ainsi que, en correspondance, sur la surface supérieure 8 de la sacoche 2 destinée à s'appliquer contre le dispositif 1.

La sacoche 2 est munie d'une ouverture 9 dont les lèvres sont associées à une fermeture à glissière. La surface 8 est la surface la plus proche verticalement de l'ouverture 9 afin d'éviter la chute d'objets à l'ouverture. L'ouverture 9 par fermeture à glissière de la sacoche est disposée vers l'arrière de la bicyclette, à l'extrémité opposée du tube de selle, afin de permettre une ouverture facile de la sacoche sans être gêné par le tube de selle.

Le dispositif 1 se fixe sur tout type de sacoche, de toute taille, de toute forme. Les sacoches de gros volume (de plus de 0,8 L) sont munies de sangles 10, 11, d'attaches s'agrippant par contact ou équivalents, situées à l'avant de la sacoche installée sur la bicyclette, et destinées à attacher la sacoche au tube de selle pour renforcer le maintien de la sacoche.

Les sacoches, quel que soit leur type ou taille, se fixent avantageusement par l'intermédiaire d'un seul point d'ancrage, des moyens de solidarisation supplémentaire à sangles étant apportés aux sacoches de gros volume (plus de 0,8 L).

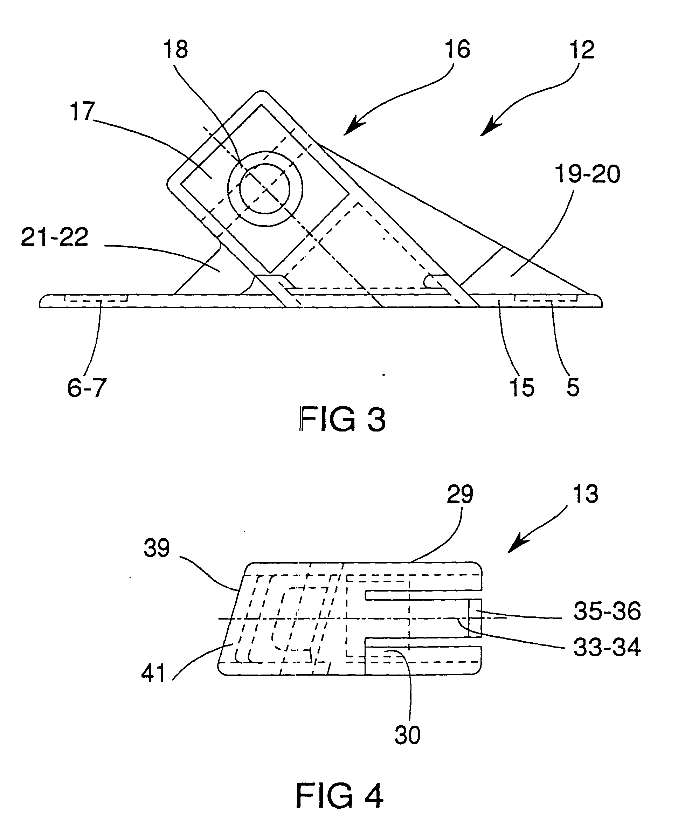

Comme représenté sur les figures 2 à 4, le dispositif 1 est constitué de deux éléments :
- un élément 12 destiné à être fixé sur la sacoche 2 (figures 2 et 3) ;
- un élément 13 mobile par rapport à et coopérant avec l'élément 12 (figures 2 et 4) à l'encontre d'un élément de rappel 14 sous la forme d'un ressort.

L'élément fixe 12 comprend d'une part une plaque de surface plane 15 susceptible de s'appliquer contre la surface supérieure plane 8 de la sacoche et d'autre part une structure 16 d'attache aux tiges de selle.

En vue de diminuer le poids de l'ensemble, la plaque 15 aux contours arrondis a la dimension minimale nécessaire pour y dispenser les trois ouvertures 5, 6, 7 et y adjoindre la structure 16 d'attache apte à coopérer avec l'élément mobile 13.

La structure 16 d'attache aux tiges de selle fait saillie par rapport à la plaque 15 et forme un angle d'environ 45° par rapport à celle-ci, de manière que la plaque 15, et donc le plan de la sacoche 2 (face supérieure 8), soit à l'horizontale lorsque la structure 16 d'attache est en prise avec les tiges de selle.

La structure 16 d'attache, de forme prismatique, présente un logement 17 de forme rectangulaire à l'intérieur duquel est prévu un manchon 18 cylindrique creux de même axe que le logement 17, axe parallèle à la plaque 15.

Des nervures 19, 20, 21 et 22, sont disposées par paires de part et d'autre de la structure 16 d'attache. Elles prennent appui sur la plaque 15 et sont disposées sur une même ligne longitudinale.

L'élément fixe 12 est pourvu d'une surface de butée 23 apte à coopérer avec les tiges 3 et 4, constituée par une rainure 24 longitudinale de section transversale en U.

Le plan de la rainure 24 est perpendiculaire à la structure 16 d'attache et forme donc un angle d'environ 45° par rapport à l'horizontale. Il forme un angle d'environ 30° par rapport à la verticale, de manière à s'adapter à toutes formes de selle.

Les plans 25, 26 des rainures se faisant face, c'est-à-dire les faces internes des rainures, ne sont pas parallèles de manière à offrir une ouverture dont la dimension transversale est de 6 à 8 mm, permettant au dispositif de s'adapter à des diamètres de tiges de selle différents.

L'élément fixe 12 est muni de deux glissières 27 et 28 parallèles, rapportées sur la plaque 15 à hauteur et dans le prolongement des parois transversales et de la structure d'attache 16.

L'élément mobile 13 comprend une armature 29 de forme rectangulaire identique mais de dimension légèrement inférieure au logement 17, de manière à coulisser à l'intérieur de ce dernier de manière téléscopique, transversalement à la sacoche.

A l'intérieur de l'armature 29 est prévu un manchon 30 cylindrique creux identique au manchon 18.

Les manchons 30 et 18 sont concentriques lorsque les éléments 12 et 13 sont assemblés et servent de support et de guidage au ressort 14.

Les parois supérieure 31 et inférieure 32 de l'armature 29 sont incisées de manière à former des languettes 33 et 34 dont les extrémités sont pourvues de moyens de butée sous la forme d'ergots 35, 36 faisant saillie vers l'extérieur de l'armature 29 par rapport aux surfaces 31 et 32.

Les ergots 35 et 36 sont de forme et dimension telles qu'ils soient aptes à glisser le long d'ouvertures 37 et 38 prévues dans les parois du logement 18.

L'élément mobile 13 présente une surface 39 de butée comprenant une rainure 40 symétriquement identique à la surface 23 par rapport à un plan vertical de dimension transversale inférieure.

Les surfaces 23 et 39 de butée présentent, en dessous des rainures 24 et 40, une surface concave et adaptée aux doigts de la main pour rendre la préhension plus confortable.

L'élément mobile 13 comporte, du côté de la sacoche, une languette 41 apte à glisser dans les glissières 27 et 28 de l'élément 12. La languette 41 guide l'élément 13 lors de l'assemblage, assure une fixation correcte des ergots 35 et 36 et renforce l'ensemble.

De nombreux évidements sont réalisés dans les éléments 12 et 13 pour les alléger tout en assurant une épaisseur suffisante aux parois des éléments, de manière à ne pas affecter leur rigidité.

Le dispositif est réalisé en matière thermoformable par injection plastique ; l'élément 12 en polyamide 66 injecté, l'élément 13 en polyamide 66. Le ressort 14 est fait d'acier inoxydable.

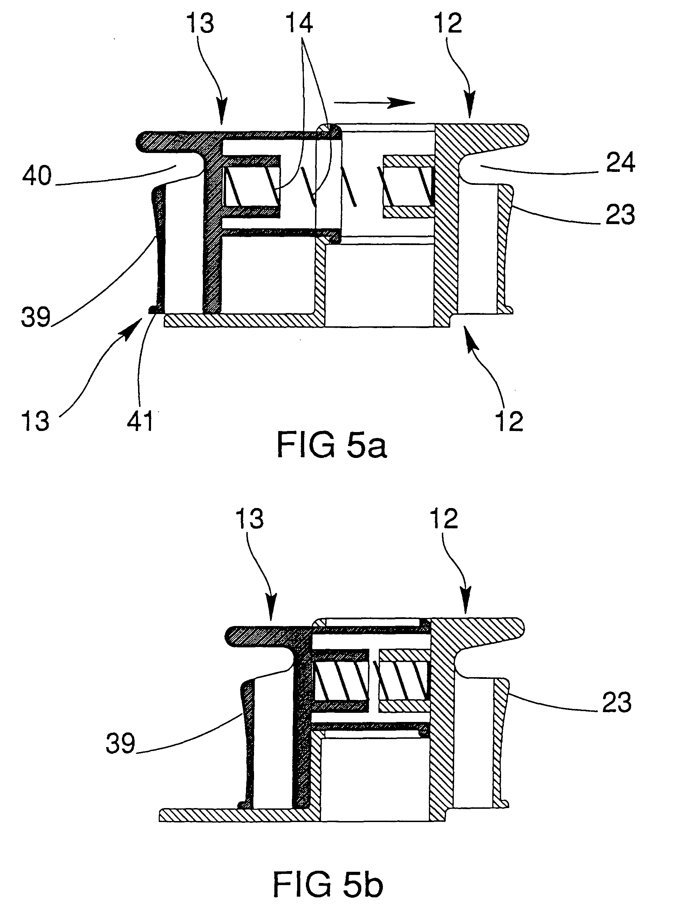

Comme indiqué sur les figures 5a et 5b, le dispositif s'assemble et fonctionne de la manière suivante :

La première étape consiste à assembler les éléments fixe 12 et mobile 13, et le ressort 14 précédemment décrits. Le ressort 14 est enroulé à l'intérieur des manchons 18 et 30 des éléments 12 et 13. Puis, la languette 41 de l'élément 13 s'engage dans les glissières 27 et 28 de l'élément 12. Quasi-simultanément, les ergots 35 et 36 de l'élément 13 viennent prendre prise à l'intérieur des ouvertures 37 et 38 correspondantes de l'élément 12.

Une fois le dispositif monté et assujetti à la sacoche, la sacoche est fixée sous la selle de la manière suivante : l'utilisateur appuie simultanément sur les surfaces 23 et 39 de butée des éléments 12 et 13 ; l'armature 29 de l'élément 13 coulisse alors à l'intérieur du logement 17 de l'élément 12 jusqu'à la position comprimée montrée sur la figure 5b. Le dispositif est placé de manière à positionner les rainures 24 et 40 à hauteur des tiges de selle. Lorsque les surfaces 23 et 39 sont relâchées, le ressort 14 se détend, comme sur la figure 5a, et les rainures 24 et 40 prennent ainsi prise sur les tiges de selle. Le ressort 14 maintient le dispositif en place et de manière parfaitement solidaire aux tiges de la selle.

Pour retirer la sacoche de la selle, une pression est à nouveau exercée sur les surfaces de préhension 23 et 39 rapprochant les rainures 24 et 40 qui sont alors libérées des tiges de selle.

Pour démonter le dispositif, c'est-à-dire séparer les éléments fixe 12 et mobile 13 montés de manière télescopique, il est nécessaire d'exercer une pression sur les languettes 33 et 34 de l'élément 13 de manière à libérer les ergots 35 et 36 de l'élément 13 des ouvertures 37 et 38 de l'élément fixe 12.

## Revendications

1. Dispositif de fixation pour sacoche sur les tiges (3, 4) d'une selle de bicyclette, **caractérisé en ce qu**'il est constitué d'un support comprenant un premier élément (12) fixable à la sacoche, et un deuxième élément (13), tous deux pourvus d'une surface de butée (23, 29), le deuxième élément étant mobile par rapport au premier élément (12), à l'encontre d'un moyen de rappel (14) tendant à éloigner les deux éléments l'un de l'autre entre une première position dans laquelle le support est à l'état comprimé et une seconde position dans laquelle le support est à l'état relâché, la première et la seconde position étant déterminées en sorte que dans la première position le support peut être introduit entre les tiges de selle et en sorte que lors du passage de la première à la seconde position les surfaces de butée des deux éléments coopèrent en butée avec les tiges et immobilisent le support par rapport à celles-ci.

2. Dispositif selon la revendication 1, **caractérisé en ce que** le deuxième élément (13) est mobile par rapport au premier élément (12) en translation.

3. Dispositif selon la revendication 1 ou 2, **caractérisé en ce que** la surface de butée (23, 29) de chacun des deux éléments (12, 13) est constituée par une rainure (24, 40) longitudinale de section transversale en U.

4. Dispositif de fixation pour sacoche sur les tiges d'une selle de bicyclette, ayant une inclinaison donnée par rapport à l'horizontale, selon la revendication 3, **caractérisé en ce que** le plan des rainures est incliné sensiblement de ladite inclinaison par rapport au plan du support destiné à être en contact avec la sacoche.

5. Dispositif selon l'une des revendications 3 ou 4 **caractérisé en ce que** le plan des rainures est incliné par rapport au plan perpendiculaire au plan du support destiné à être en contact avec la sacoche.

6. Dispositif selon l'une des revendications 3 à 4, **caractérisé en ce que** les faces internes (25, 26) des rainures (24,40) ne sont pas parallèles.

7. Dispositif selon l'une des revendications 1 à 6, **caractérisé en ce que** le deuxième élément (13), coulisse à l'intérieur du premier élément (12) fixe, de manière télescopique.

8. Dispositif selon l'une des revendications 1 à 7, **caractérisé en ce que** le moyen de rappel est un ressort (14) de compression.

9. Dispositif selon l'une des revendications 1 à 8, **caractérisé en ce que** l'élément (12) fixe comprend une plaque (15) de surface plane susceptible de s'appliquer contre la face supérieure plane (8) de la sacoche et d'y être fixée par rivetage ou moyens équivalents.

10. Dispositif selon l'une des revendications 1 à 9, **caractérisé en ce que** l'élément (13) mobile est muni à son extrémité de moyens de retenue (35, 36) du type ergot, aptes à limiter en butée le déplacement de l'élément mobile (13).

11. Dispositif selon l'une des revendications 1 à 10, **caractérisé en ce que** chaque élément (12, 13) comporte une surface de préhension (23, 39), sensiblement transversale aux tiges (3, 4) et présentant une forme adaptée aux doigts de la main.

12. Dispositif selon l'une des revendications 1 à 11, **caractérisé en ce qu**'il est réalisé en matière thermoformable par injection plastique.

## Patentansprüche

1. Befestigungsvorrichtung für eine Satteltasche an den Stangen (3, 4) eines Fahrradsattels, **dadurch gekennzeichnet, daß** sie aus einem Träger besteht, der ein erstes, an der Satteltasche befestigbares Element (12) und ein zweites Element (13) aufweist, die beide mit einer Anschlagfläche (23, 29) versehen sind, wobei das zweite Element in bezug auf das erste Element (12) gegen die Wirkung einer Rückholeinrichtung (14), die die Neigung hat, die beiden Elemente voneinander zu trennen, zwischen einer ersten Stellung, in der der Träger sich im zusammengedrückten Zustand befindet, und einer zweiten Stellung beweglich ist, in der der Träger im entspannten Zustand ist, wobei die erste und die zweite Stellung derart bestimmt sind, daß in der ersten Stellung der Träger zwischen die Sattelstangen eingeführt werden kann, und daß beim Übergang von der ersten in die zweite Stellung die Anschlagflächen der beiden Elemente mit den Stangen in Anschlag zusammenwirken und den Träger in bezug auf letztere blockieren.

2. Vorrichtung nach Anspruch 1, **dadurch gekennzeichnet, daß** das zweite Element (13) in bezug auf das erste Element (12) in Translationsrichtung beweglich ist.

3. Vorrichtung nach Anspruch 1 oder 2, **dadurch gekennzeichnet, daß** die Anschlagfläche (23, 29) jedes der beiden Elemente (12, 13) aus einer Längsnut (24, 40) mit U-förmigem Querschnitt besteht.

4. Befestigungsvorrichtung für eine Satteltasche an den Stangen eines Fahrradsattels, mit einer gegebenen Neigung in bezug auf die Waagrechte, nach Anspruch 3, **dadurch gekennzeichnet, daß** die Ebene der Nuten um im wesentlichen diese Neigung in bezug auf die Ebene des Trägers geneigt ist, die mit der Satteltasche in Kontakt stehen soll.

5. Vorrichtung nach einem der Ansprüche 3 oder 4, **dadurch gekennzeichnet, daß** die Ebene der Nuten in bezug auf die Ebene geneigt ist, die senkrecht zur Ebene des Trägers liegt, die mit der Satteltasche in Kontakt stehen soll.

6. Vorrichtung nach einem der Ansprüche 3 bis 4, **dadurch gekennzeichnet, daß** die Innenflächen (25, 26) der Nuten (24, 40) nicht parallel sind.

7. Vorrichtung nach einem der Ansprüche 1 bis 6, **dadurch gekennzeichnet, daß** das zweite Element (13) innerhalb des ersten, ortsfesten Elements (12) teleskopisch gleitet.

8. Vorrichtung nach einem der Ansprüche 1 bis 7, **dadurch gekennzeichnet, daß** die Rückholeinrichtung eine Druckfeder (14) ist.

9. Vorrichtung nach einem der Ansprüche 1 bis 8, **dadurch gekennzeichnet, daß** das ortsfeste Element (12) eine Platte (15) mit einer ebenen Oberfläche aufweist, die sich gegen die obere, ebene Oberfläche (8) der Satteltasche anlegen und dort durch Vernieten oder ähnliche Mittel befestigt werden kann.

10. Vorrichtung nach einem der Ansprüche 1 bis 9, **dadurch gekennzeichnet, daß** das bewegliche Element (13) an seinem Ende mit Rückhaltemitteln (35, 36) der Art Vorsprung versehen ist, die die Anschlag-Verschiebung des beweglichen Elements (13) begrenzen können.

11. Vorrichtung nach einem der Ansprüche 1 bis 10, **dadurch gekennzeichnet, daß** jedes Element (12, 13) eine Greiffläche (23, 29) aufweist, die im wesentlichen quer zu den Stangen (3, 4) liegt und eine an die Finger der Hand angepaßte Form aufweist.

12. Vorrichtung nach einem der Ansprüche 1 bis 11, **dadurch gekennzeichnet, daß** sie durch Kunststoff-Spritzformen aus wärmeformbarem Material hergestellt wird.

## Claims

1. Device for fixing a bag on the rods (3, 4) of a bicycle saddle, **characterised in that** it is made up of a support comprising a first element (12) which can be fixed to the bag, and a second element (13), both of them provided with a stop surface (23, 29), the second element being moveable in relation to the first element (12), against a return means (14) tending to distance the two elements from one another between a first position in which the support is in a compressed state and a second position in which the support is in a relaxed state, the first and second positions being determined so that in the first position the support can be introduced between the saddle rods and so that on passing from the first to the second position, the stop surfaces of the two elements co-operate as stops with the rods and immobilise the support in relation to the latter.

2. Device according to claim 1, **characterised in that** the second element (13) can be moved in translation in relation to the first element (12).

3. Device according to claim 1 or 2, **characterised in that** the stop surface (23, 29) of each of the two elements (12, 13) is constituted by a longitudinal groove (24, 40) with a U-shaped cross section.

4. Device for fixing a bag on the rods of a bicycle saddle, having a given inclination in relation to the horizontal, according to claim 3, **characterised in that** the plane of the grooves is inclined substantially by said inclination in relation to the plane of the support intended to be in contact with the bag.

5. Device according to one of claims 3 or 4, **characterised in that** the plane of the grooves is inclined in relation to the plane perpendicular to the plane of the support intended to be in contact with the bag.

6. Device according to one of claims 3 to 4, **characterised in that** the internal faces (25, 26) of the grooves (24, 40) are not parallel.

7. Device according to one of claims 1 to 6, **characterised in that** the second element (13) slides inside the first fixed element (12), in the manner of a telescope.

8. Device according to one of claims 1 to 7, **characterised in that** the return means is a compression spring (14).

9. Device according to one of claims 1 to 8, **characterised in that** the fixed element (12) comprises a plate (15) with a flat surface capable of being applied against the upper flat face (8) of the bag and of being fixed there by riveting or equivalent means.

10. Device according to one of claims 1 to 9, **characterised in that** the mobile element (13) is provided at its end with retaining means (35, 36) of the joggle type, suitable for limiting as a stop the displacement of the mobile element (13).

11. Device according to one of claims 1 to 10, **characterised in that** each element (12, 13) includes a grasping surface (23, 39), substantially transverse with respect to the rods (3, 4) and having a shape adapted to the fingers of the hand.

12. Device according to one of claims 1 to 11, **characterised in that** it is realised in a material which is thermoformable by plastic injection.
